(19) Europäisches Patentamt / European Patent Office / Office européen des brevets

(11) **EP 4 036 597 A1**

(12) **EUROPÄISCHE PATENTANMELDUNG**

(43) Veröffentlichungstag:
**03.08.2022 Patentblatt 2022/31**

(21) Anmeldenummer: **21200382.6**

(22) Anmeldetag: **01.10.2021**

(51) Internationale Patentklassifikation (IPC):
**G01S 7/4861** (2020.01)   **G01S 7/487** (2006.01)

(52) Gemeinsame Patentklassifikation (CPC):
**G01S 17/10; G01S 7/4861; G01S 7/4865;**
G01S 17/42

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **28.01.2021 DE 202021100425 U**

(71) Anmelder: **Leuze electronic GmbH + Co. KG**
**73277 Owen/Teck (DE)**

(72) Erfinder:
- **Auer, Robert**
  **85540 Haar (DE)**
- **Feller, Bernhard**
  **86316 Friedberg (DE)**

(74) Vertreter: **Ruckh, Rainer Gerhard**
**Patentanwalt**
**Jurastrasse 1**
**73087 Bad Boll (DE)**

(54) **LIDAR-SENSOR MIT BEREICHSWEITE FEHLERKORREKTUR**

(57)     Die Erfindung betrifft einen optischen Sensor (1) zur Erfassung von Objekten (10) in einem Überwachungsbereich, umfassend einen Lichtimpulse (4) emittierenden Sender (5), wenigstens einen Empfänger (7), der zum Empfang von von einem Objekt (10) zurückreflektierten Lichtimpulsen (4) ausgebildet ist, und eine Auswerteeinheit (9), in welcher aus der Laufzeit ($T_{TOF}$) von Lichtimpulsen (4) vom Sender (5) zu einem Objekt (10) und zurück zum Empfänger (7) ein Distanzmesswert für die Distanz des Objekts (10) zum optischen Sensor (1) bestimmt wird. Durch einen auf dem wenigstens einen Empfänger (7) auftreffenden Lichtimpuls (4) wird wenigstens ein Empfangssignal generiert, das mit wenigstens zwei Triggerpunkten ($P_{T1}$, $P_{T2}$) bewertet wird, wobei durch jeden Triggerpunkt ($P_{T1}$, $P_{T2}$) ein Zeitmesswert ($T_1$, $T_2$) generiert wird. In der Auswerteeinheit (9) wird nur einer der Zeitmesswerte ($T_1$, $T_2$) zur Bestimmung des Distanzmesswerts herangezogen.

**Fig. 4**

EP 4 036 597 A1

**Beschreibung**

Die Erfindung betrifft einen optischen Sensor.

Derartige optische Sensoren bilden Distanzsensoren, die nach einem Impuls-Laufzeit-Verfahren arbeiten. Der Sender des optischen Sensors sendet Lichtimpulse aus, die von einem zu detektierenden Objekt zu einem dem Sender zugeordneten Empfänger zurückreflektiert werden. Zur Distanzbestimmung des Objekts wird in einer Auswerteeinheit des optischen Sensors die Laufzeit der Lichtimpulse vom Sender zum Objekt und zurück zum Empfänger bestimmt und dadurch die Objektdistanz bestimmt.

Als Bezugspunkt wird das durch einen Lichtimpuls im Empfänger generierte Empfangssignal, das typisch mit einem Verstärker verstärkt wird, mit einem Schwellwert bewertet.

Die so durchgeführte Zeitmessung ist jedoch prinzipiell mit einem Messfehler behaftet, der dadurch bedingt ist, dass die zu detektierenden Objekte unterschiedliche Oberflächenbeschaffenheiten mit stark variierenden Reflektivitäten aufweisen und/oder sich die Objekte in unterschiedlichen Entfernungen befinden.

Aufgrund der unterschiedlichen Reflektivitäten und Entfernungen der Objekte ergeben sich bei deren Detektion stark unterschiedliche Verläufe der Empfangssignale. Da diese immer mit demselben Schwellwert bewertet werden, ergeben sich für Objekte mit unterschiedlichen Reflektivitäten unterschiedliche Distanzmesswerte obwohl sich diese in derselben Entfernung zum Objekt befinden.

Zur Korrektur dieses Hell-Dunkel-Fehlers der Distanzmessungen ist es bekannt, den maximalen Pegel des jeweiligen Empfangssignals mit einem Spitzenwertdetektor zu bestimmen, um mit diesem und einer Korrekturtabelle den Distanzmesswert zu korrigieren. Abgesehen davon, dass der Spitzenwertdetektor einen zusätzlichen konstruktiven Aufwand bedingt, ist diese Methode auch fehleranfällig infolge von Driften analoger Bauteile, die zur Auswertung erforderlich sind.

Prinzipiell kann der Hell-Dunkel-Fehler durch den Einsatz von Verstärkern mit sehr hohen Bandbreiten reduziert werden. Problematisch hierbei ist jedoch, dass derartige Verstärker zu Übersteuerungen neigen und sich dadurch nicht monoton verhalten, das heißt der Fehler sinkt zunächst mit steigendem Empfangssignalpegel und steigt dann wieder an. Dies erschwert eine rechnerische Kompensation des Hell-Dunkel-Fehlers oder macht sie sogar unmöglich.

Der Erfindung liegt die Aufgabe zugrunde, einen optischen Sensor und ein Verfahren bereitzustellen, mittels derer genaue Distanzmessungen durchführbar sind.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich, umfassend einen Lichtimpulse emittierenden Sender, wenigstens einen Empfänger, der zum Empfang von von einem Objekt zurückreflektierten Lichtimpulsen ausgebildet ist, und eine Auswerteeinheit, in welcher aus der Laufzeit von Lichtimpulsen vom Sender zu einem Objekt und zurück zum Empfänger ein Distanzmesswert für die Distanz des Objekts zum optischen Sensor bestimmt wird. Durch einen auf dem wenigstens einen Empfänger auftreffenden Lichtimpuls wird wenigstens ein Empfangssignal generiert, das mit wenigstens zwei Triggerpunkten bewertet wird, wobei durch jeden Triggerpunkt ein Zeitmesswert generiert wird. In der Auswerteeinheit wird nur einer der Zeitmesswerte zur Bestimmung des Distanzmesswerts herangezogen.

Ein wesentlicher Vorteil der Erfindung besteht darin, dass bei der Bewertung der Empfangssignale durch Triggerpunkte eine digitale Distanzmessung nach einem Impuls-Laufzeit-Verfahren durchgeführt wird.

Dabei ist vorteilhaft, dass jeder Triggerpunkt von einem Schwellwert gebildet ist.

Zweckmäßig ist jeder Schwellwert in einem Komparator vorgegeben.

Da die zur Durchführung der Distanzmessungen erforderliche Bewertung der Empfangssignale mit digitalen Schaltungskomponenten erfolgt, werden im Vergleich zu analogen Schaltungen erheblich weniger Drifteffekte erhalten, wodurch bereits die Genauigkeit der Distanzmessungen erheblich verbessert wird.

Ein weiterer wesentlicher Vorteil der Erfindung besteht darin, dass das durch einen von einem zu detektierenden Objekt zum Empfänger zurückreflektierten Lichtimpuls generierte Empfangssignal mit wenigstens zwei Triggerpunkten bewertet wird, so dass mehrere Triggerpunkte zur Durchführung der Distanzmessung zur Verfügung stehen.

Auch dadurch kann die Genauigkeit der Distanzmessungen erhöht werden. Hierzu kann zunächst in der Auswerteeinheit ein für die Distanzmessung besonders geeigneter Triggerpunkt ausgewählt werden. Bereits durch diese Auswahl lässt sich die Genauigkeit der Distanzmessung erhöhen und insbesondere der Hell-Dunkel-Fehler reduzieren.

Besonders vorteilhaft können die weiteren Triggerpunkte zur Bestimmung von Korrekturwerten für die Distanzmesswerte verwendet werden, wodurch Messfehler, insbesondere Hell-Dunkel-Fehler reduziert werden können.

Gemäß einer ersten Ausgestaltung wird in der Auswerteeinheit der durch einen ersten Triggerpunkt gewonnene Zeitmesswert für die Bestimmung des Distanzmesswerts herangezogen. Aus der Differenz der mit dem Triggerpunkt gewonnenen Zeitmesswerte wird ein Korrekturwert für den Distanzmesswert bestimmt.

Gemäß einer zweiten Ausgestaltung wird in der Auswerteeinheit der durch einen ersten Triggerpunkt gewonnene Zeitmesswert für die Bestimmung des Distanzmesswerts herangezogen. Der durch den weiteren Triggerpunkt gewonnene Zeitmesswert wird zur Bestimmung eines Korrekturwerts herangezogen.

Vorteilhaft bildet in beiden Fällen der Korrekturwert eine Hell-Dunkel-Korrektur des Distanzmesswerts.

Gemäß einer vorteilhaften Ausführungsform der Erfindung werden die Triggerpunkte in unterschiedlichen Signalpfaden generiert.

Damit wird eine mehrkanalige Auswertestruktur geschaffen, die eine besonders genaue Durchführung von Distanzmessungen ermöglicht, insbesondere auch eine Reduzierung von Hell-Dunkel-Fehlern bei den Distanzmessungen.

Besonders vorteilhaft werden für einen empfangsseitig registrierten Lichtimpuls in den einzelnen Signalpfaden unterschiedliche Empfangssignale generiert.

Die unterschiedlichen Empfangssignale werden jeweils mit einem Triggerpunkt zur Generierung von Zeitmesswerten bewertet, wobei jeder Zeitmesswert in der Auswerteeinheit zur Bestimmung eines Distanzmesswerts ausgewählt werden kann.

Gemäß einer ersten vorteilhaften Ausführungsform weisen die Signalpfade unterschiedliche Empfänger auf, in welchen Empfangssignale generiert werden.

Dabei sind die Empfänger so angeordnet, dass ein von einem Objekt zurückreflektierter Lichtimpuls auf alle diese Empfänger geführt wird. Dies lässt sich vorteilhaft dadurch erreichen, dass alle Empfänger einer gemeinsamen Empfangsoptik zugeordnet sind. Die vorteilhaft von Photodioden gebildeten Empfänger können dicht nebeneinander liegend hinter der Empfangsoptik angeordnet sein.

Gemäß einer weiteren vorteilhaften Ausführungsform weisen die Signalpfade jeweils einen Verstärker auf, in welchem Empfangssignale verstärkt werden.

Dabei können vorteilhaft die Verstärker unterschiedliche Verstärkungscharakteristiken aufweisen.

Zweckmäßig ist jedem Verstärker ein Spitzenwertdetektor zugeordnet.

Die beiden Ausführungsformen können auch miteinander kombiniert werden, das heißt die Signalpfade können unterschiedliche Empfänger und unterschiedliche Verstärker aufweisen.

Generell werden in den einzelnen Signalpfaden unterschiedliche Empfangssignale für einen empfangenen Lichtimpuls generiert. In der Auswerteeinheit erfolgt anhand der unterschiedlichen Empfangssignale eine Auswahl eines Signalpfads, der zur Bestimmung der Distanzmesswerte herangezogen wird. Die Auswahl erfolgt derart, dass der Signalpfad gewählt wird, dessen Empfangssignal eine Distanzbestimmung mit dem geringst möglichen Hell-Dunkel-Fehler ermöglicht.

Hierzu werden in der Auswerteeinheit die Signalverläufe der Empfangssignale der Signalpfade bewertet. Abhängig von dieser Bewertung wird ein Signalpfad ausgewählt, wobei der Zeitmesswert, der mit dem Triggerpunkt des ausgewählten Signalpfads generiert wird, zur Bestimmung des Distanzmesswerts herangezogen wird.

Dabei werden zur Bewertung eines Empfangssignals als Kenngrößen positive und/oder negative Triggerflanken gezählt und jeweils mit einem Grenzwert verglichen.

Alternativ oder zusätzlich werden zur Bewertung eines Empfangssignals als Kenngrößen Peak-Pegel und/oder Pulsbreiten von Überschwingern bestimmt und jeweils mit einem Grenzwert verglichen.

Ein Empfangssignal für die Bestimmung eines Distanzmesswerts wird dann verworfen, wenn eine Kenngröße dieses Empfangssignals oberhalb des jeweiligen Grenzwerts liegt.

Mit dieser Bewertung kann analysiert werden, welche Empfangssignale der einzelnen Signalpfade durch Signalverformungen, wie zum Beispiel Überschwinger stark beeinträchtigt sind. Da für diese durch eine Bewertung mit einem Triggerpunkt keine zuverlässigen Distanzmesswerte erhalten würden, werden diese für die weitere Auswertung zur Distanzmessung nicht berücksichtigt. Durch diese Auswahl kann damit der Hell-Dunkel-Fehler bei den Distanzmessungen signifikant reduziert werden.

Der erfindungsgemäße optische Sensor ist im einfachsten Fall als Distanzsensor ausgebildet, dessen Lichtimpulse in nur einer Strahlrichtung abgestrahlt werden. Alternativ kann der optische Sensor auch als scannender Distanzsensor ausgebildet sein.

Die Erfindung wird im Folgenden anhand der Zeichnungen erläutert. Es zeigen:

Figur 1: Schematische Darstellung eines ersten Ausführungsbeispiels des erfindungsgemäßen optischen Sensors.

Figur 2: Schematische Darstellung eines zweiten Ausführungsbeispiels des erfindungsgemäßen optischen Sensors.

Figur 3: Erstes Ausführungsbeispiel einer Signalauswertung für den optischen Sensor gemäß Figur 1.

Figuren 4a - c: Zeitdiagramme für das Ausführungsbeispiel gemäß Figur 3.

Figur 5: Variante der Zeitdiagramme gemäß Figur 4.

Figur 6: Zweites Ausführungsbeispiel einer Signalauswertung für den optischen Sensor gemäß Figur 1.

Figur 7: Ausführungsbeispiel einer Signalauswertung für den optischen Sensor gemäß Figur 2.

Figuren 8a, b:      Zeitliche Empfangssignalverläufe für das Ausführungsbeispiel gemäß Figur 7.

Figur 9:      Beispiel eines Empfangssignalverlaufs für das Ausführungsbeispiel gemäß Figur 7.

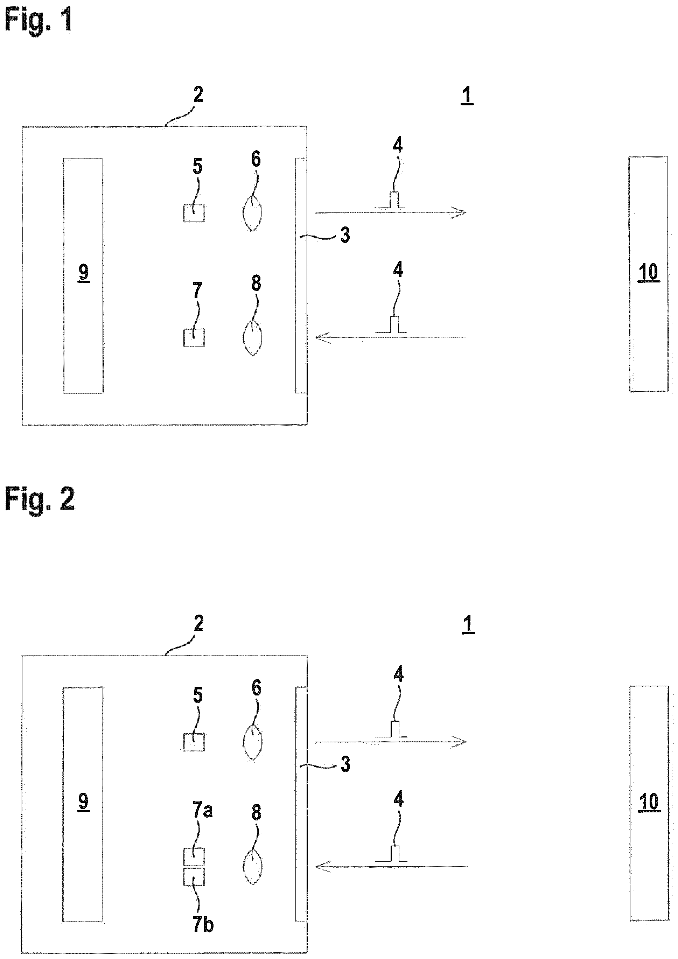

Figur 1 zeigt schematisch ein Ausführungsbeispiel des erfindungsgemäßen optischen Sensors 1. Die Komponenten des optischen Sensors 1 sind in einem Gehäuse 2 integriert, in dessen Frontwand ein transparentes Austrittsfenster 3 vorgesehen ist. Der optische Sensor 1 weist einen Lichtimpulse 4 emittierenden Sender 5 auf, der beispielsweise von einer Laserdiode gebildet ist. Dem Sender 5 ist eine Sendeoptik 6 zugeordnet. Weiterhin ist ein Empfänger 7 mit vorgeordneter Empfangsoptik 8 vorgesehen. Der Empfänger 7 ist beispielsweise von einer Photodiode gebildet. Schließlich ist eine Auswerteeinheit 9 vorgesehen, die den Sender 5 steuert und Empfangssignale des Empfängers 7 auswertet. Zur Objektdetektion werden die vom Sender 5 ermittelten Lichtimpulse 4 durch das Austrittsfenster 3 in den Überwachungsbereich geführt. Dort werden die Lichtimpulse 4 von einem Objekt 10 reflektiert und durch das Austrittsfenster 3 zum Empfänger 7 geführt.

Der optische Sensor 1 ist als nach einem Impuls-Laufzeit-Verfahren arbeitenden Distanzsensor ausgebildet. Zur Distanzbestimmung wird die Laufzeit von Lichtimpulsen 4 vom Sender 5 zu einem detektierenden Objekt 10 und zurück zum Empfänger 7 bestimmt.

Figur 2 zeigt eine Variante des optischen Sensors 1 gemäß Figur 1. Die Ausführungsform gemäß Figur 2 unterscheidet sich von der Ausführungsform gemäß Figur 1 nur dadurch, dass zwei Empfänger 7a, 7b vorgesehen sind. Die Empfänger 7a, 7b sind dicht nebeneinander liegend hinter der Empfangsoptik 8 angeordnet, so dass jeder von einem Objekt 10 zurückreflektierte Lichtimpuls 4 über die Empfangsoptik 8 auf beide Empfänger 7a, 7b geführt wird. Generell können auch mehr als zwei Empfänger vorgesehen sein.

Die Ausführungsformen der Figuren 1 und 2 können auch zu einem scannenden Distanzsensor weitergebildet sein.

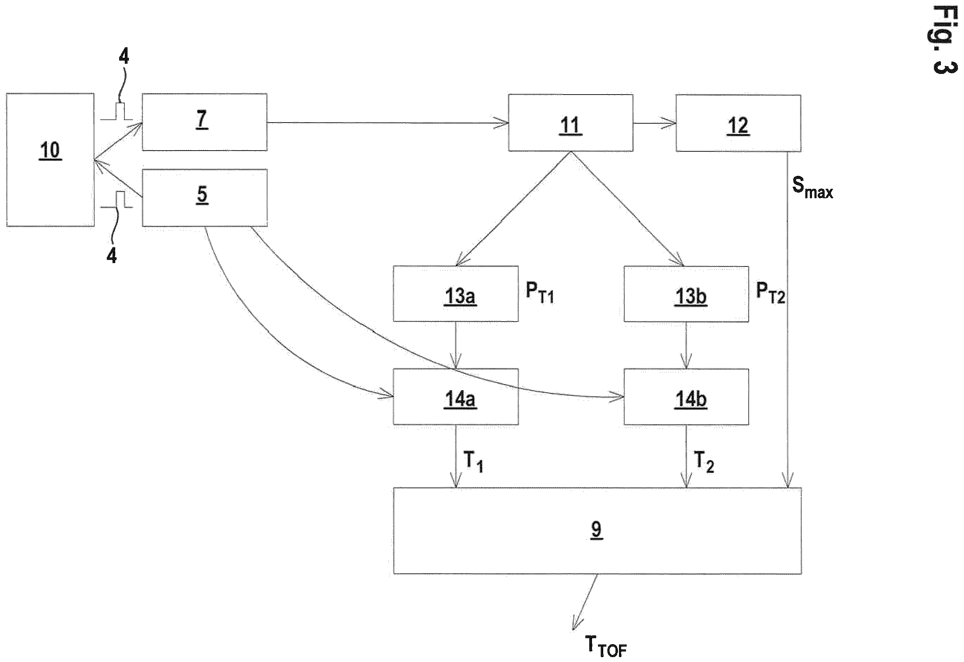

Figur 3 zeigt ein erstes Ausführungsbeispiel der Signalauswertung für den optischen Sensor 1 gemäß Figur 1. Die vom Sender 5 emittierten Lichtimpulse 4 treffen auf ein Objekt 10 und werden von dort auf den Empfänger 7 geführt. Die dadurch generierten Empfangssignale werden in einem Verstärker 11 verstärkt. Dem Verstärker 11 ist ein Spitzenwertdetektor 12 zugeordnet, mit dem Extremwerte (Peak-Pegel) $S_{max}$ der verstärkten Empfangssignale bestimmt und der Auswerteeinheit 9 zugeführt werden.

Die Empfangssignale am Ausgang des Verstärkers 11 werden zwei Triggern 13a, 13b zugeführt, die in Form von Komparatoren ausgeführt sind. Mit den Triggern 13a, 13b wird das Empfangssignal derart bewertet, dass bei Überschreiten eines von dem Trigger 13a, 13b vorgegebenen Schwellwerts ein Triggerpunkt $P_{T1}$, $P_{T2}$ generiert wird. Jedem Trigger 13a, 13b ist eine Zeitmesseinheit 14a, 14b nachgeordnet. In jeder Zeitmesseinheit 14a, 14b wird für jeden Lichtimpuls 4 ein Zeitmesswert $T_1$, $T_2$ generiert, welche die Laufzeit $T_{TOF}$ des jeweiligen Lichtimpulses 4 vom Sender 5 zum Objekt 10 und zurück zum Empfänger 7 darstellt. Die Zeitmesseinheit 14a, 14b wird mit Aussenden des Lichtimpulses 4 gestartet und durch den jeweiligen Triggerpunkt $P_{T1}$, $P_{T2}$ beendet. Die Zeitmesswerte $T_1$, $T_2$ werden der Auswerteeinheit 9 zur weiteren Auswertung zugeführt.

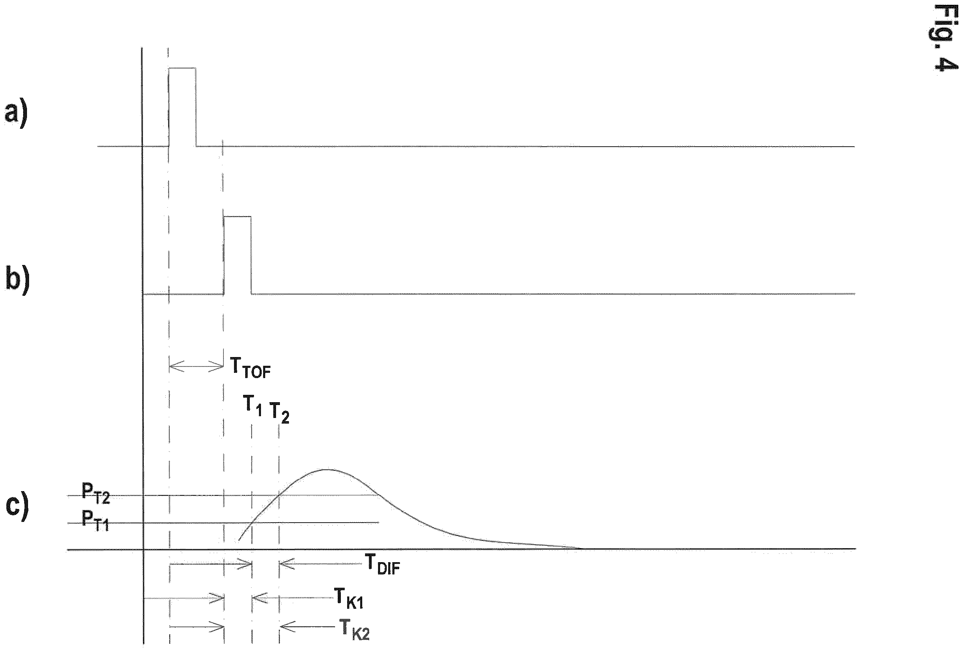

Die Figuren 4a bis 4c zeigen Zeitdiagramme der Signalauswertung gemäß Figur 3. Figur 4a zeigt die idealisierte Aussendung eines Lichtimpulses 4. Figur 4b zeigt den idealisierten Empfang dieses von einem Objekt 10 zum Empfänger 7 zurückreflektierten Lichtimpulses 4. Entsprechend der Distanz des Objekts 10 zum optischen Sensor 1 trifft der Lichtimpuls um eine Laufzeit $T_{TOF}$ gegenüber der Aussendung verzögert auf den Empfänger 7. Diese Laufzeit $T_{TOF}$ wird in der Auswerteeinheit 9 zur Bestimmung eines Distanzmesswerts aus dem realen Empfangssignalverlauf, der in Figur 4c dargestellt ist, bestimmt.

Figur 4c zeigt die Zeitmesswerte $T_1$, $T_2$, die durch die Triggerpunkte $P_{T1}$, $P_{T2}$ mittels Schwellwertbewertung aus dem Empfangssignalverlauf gewonnen werden.

Das Zeitintervall $T_{DIF}$ definiert die Zeitdifferenz zwischen $T_1$ und $T_2$. Die Zeitintervalle $T_{K1}$, $T_{K2}$ definieren Korrekturwerte, um aus den Zeitmesswerten $T_1$, $T_2$ die tatsächliche Laufzeit $T_{TOF}$ zu ermitteln. Die Korrekturwerte $T_{K1}$, $T_{K2}$ sind in Form von Korrekturtabellen in der Auswerteeinheit 9 hinterlegt. Diese Korrekturtabellen werden dadurch bestimmt, dass in vorgegebenen, bekannten Distanzen ein Target mit unterschiedlichen Reflektivitäten vermessen wird. Aus der Differenz von gemessenen und tatsächlichen Distanzwerten ergeben sich die Korrekturwerte $T_{K1}$, $T_{R2}$.

In der Auswerteeinheit 9 erfolgt eine Signalauswahl derart, dass die Laufzeit $T_{TOF}$, aus welcher der Distanzmesswert ermittelt wird, aus dem Zeitmesswert $T_1$ und/oder $T_2$ gebildet wird. Zudem erfolgt mittels den Korrekturwerten $T_{K1}$, $T_{K2}$ eine Kompensation des Hell-Dunkel-Fehlers der Distanzmessung.

Wird nur der Zeitmesswert $T_1$ zur Distanzmessung herangezogen, ergibt sich die Laufzeit $T_{TOF}$ gemäß der folgenden Beziehung:

$$T_{TOF} = T_1 - T_{K1}$$

Wird nur der Zeitmesswert $T_2$ zur Distanzmessung herangezogen, ergibt sich die Laufzeit $T_{TOF}$ gemäß der folgenden Beziehung:

$$T_{TOF} = T_2 - T_{K2}$$

Werden beide Zeitmesswerte $T_1$ und $T_2$ zur Distanzmessung herangezogen, ergibt sich die Laufzeit $T_{TOF}$ zum Beispiel gemäß der folgender Beziehungen:

$$T_{TOF} = T_1 - (T_{K1} + T_{K2})/2$$

oder

$$T_{TOF} = ((T_1 + T_2) - (T_{K1} + T_{K2}))/2$$

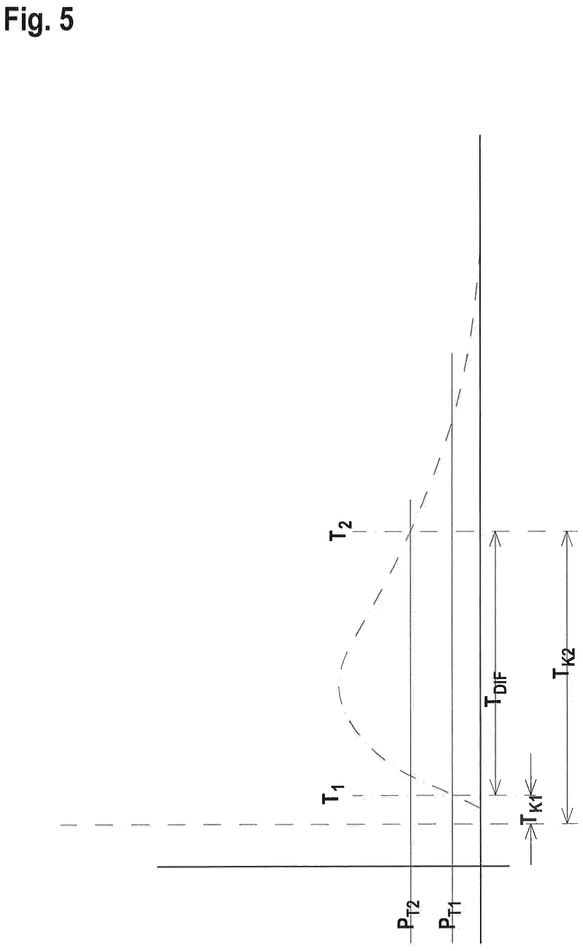

Figur 5 zeigt eine Variante der Signalauswertung der Figuren 4a bis 4c. Während bei der Ausführungsform gemäß Figur 4c die Triggerpunkte $P_{T1}$, $P_{T2}$ die ansteigende Flanke des Empfangssignals messen, messen die Triggerpunkte $P_{T1}$, $P_{T2}$ gemäß Figur 5 sowohl die ansteigende als auch die fallende Flanke des Empfangssignals.

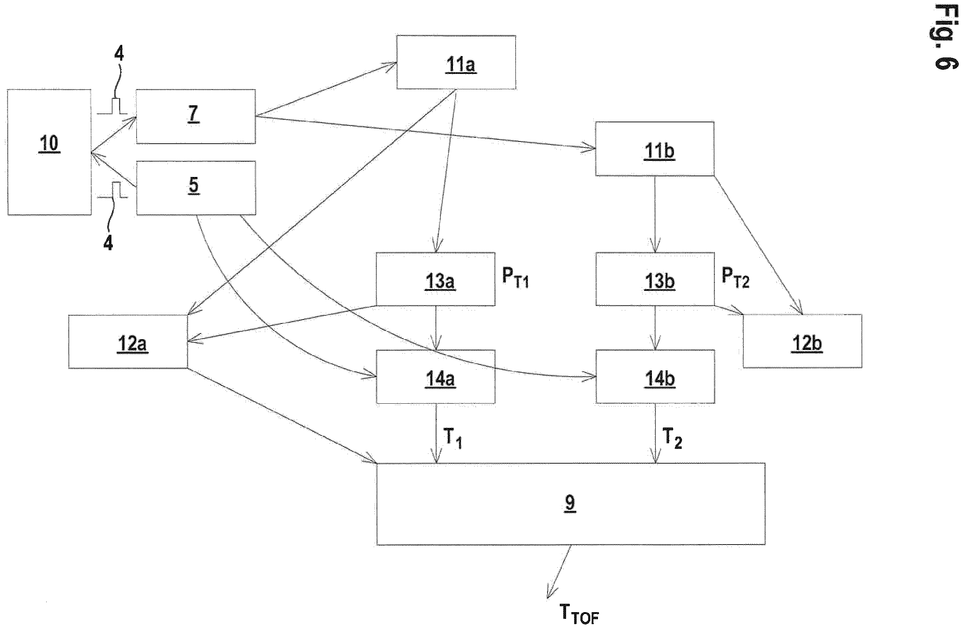

Figur 6 zeigt ein weiteres Ausführungsbeispiel der Signalauswertung für den optischen Sensor 1 gemäß Figur 1.

Im Unterschied zur Ausführungsform gemäß Figur 5 wird das Empfangssignal des Empfängers 7 zwei Verstärkern 11a, 11b mit unterschiedlichen Verstärkungscharakteristiken, insbesondere unterschiedlichen Bandbreiten, zugeführt, wobei jedem Verstärker 11a, 11b ein Spitzenwertdetektor 12a, 12b zugeordnet ist. Die Ausgangssignale des Verstärkers 11a werden dem Trigger 13a, die Ausgangssignale des Verstärkers 11b dem Trigger 13b zugeführt.

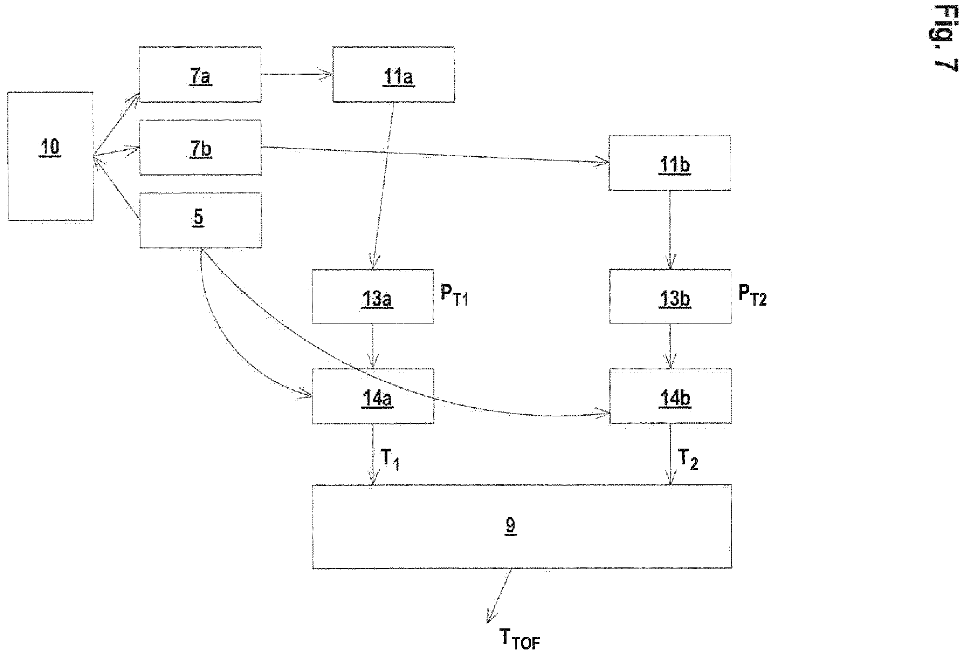

Figur 7 zeigt ein weiteres Ausführungsbeispiel der Signalauswertung für den optischen Sensor 1 gemäß Figur 2.

Im Unterschied zu den Ausführungsformen gemäß den Figuren 3 und 6 wird ein von einem Objekt 10 zurückreflektierter Lichtimpuls 4 auf zwei Empfänger 7a, 7b geführt. Die Empfangssignale des ersten Empfängers 7a werden im ersten Verstärker 11a verstärkt und dann dem ersten Trigger 13a und der nachgeordneten Zeitmesseinheit 14a zugeführt. Die Empfangssignale des zweiten Empfängers 7b werden im zweiten Verstärker 11b verstärkt und dann dem zweiten Trigger 13b und der nachgeordneten Zeitmesseinheit 14b zugeführt. Die Verstärker 11a, 11b weisen wieder unterschiedliche Verstärkungscharakteristiken auf.

Bei den Ausführungsformen der Figuren 6 und 7 werden durch die Verstärker 11a, 11b und (bei der Ausführungsform gemäß Figur 7) zwei Signalpfade gebildet, in welchen die Zeitmesswerte $T_1$, $T_2$ generiert werden.

Die Signalauswertung der in den Zeitmesseinheiten 14a, 14b ermittelten Zeitmesswerten $T_1$ $T_2$ zur Bestimmung von $T_{TOF}$ und damit eines Distanzmesswerts erfolgt in der Auswerteeinheit 9 analog zur Ausführungsform der Figur 3.

Insbesondere erfolgt auch bei diesen Ausführungsformen eine Signalauswahl, und zwar derart, dass durch eine Analyse der Empfangssignalverläufe in den beiden Signalpfaden entschieden wird, welcher Zeitmesswert $T_1$, $T_2$ zur Bestimmung des Distanzmesswerts herangezogen wird.

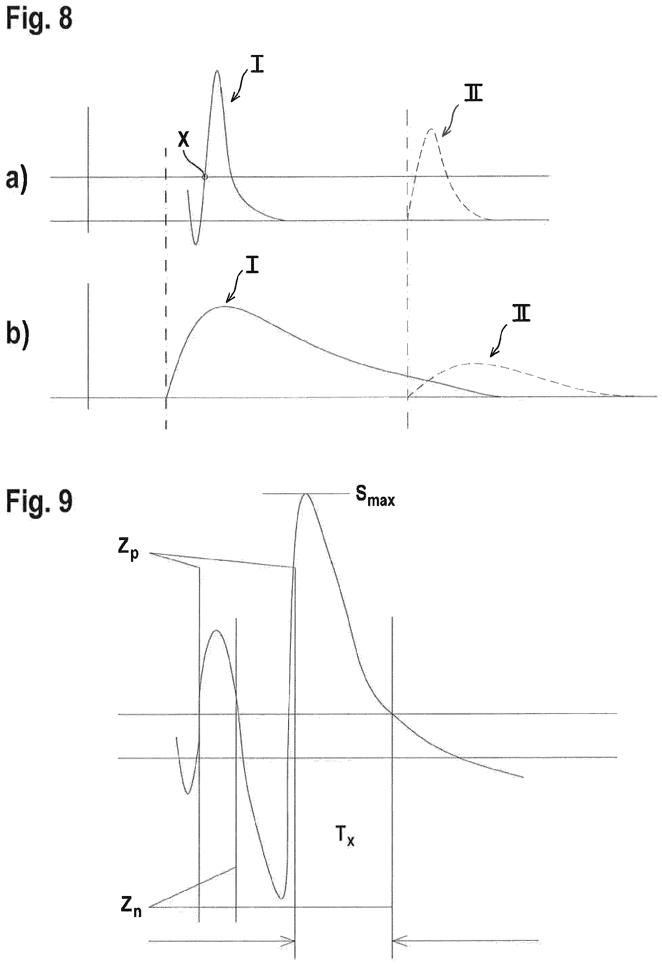

Dies ist in den Figuren 8a, 8b veranschaulicht.

Figur 8a zeigt zeitliche Empfangssignalverläufe des ersten Signalpfads, bei dem ein Verstärker 11 mit hoher Bandbreite eingesetzt wird. Figur 8b zeigt zeitliche Empfangssignalverläufe des zweiten Signalpfads, bei dem ein Verstärker 11 mit geringer Bandbreite eingesetzt wird. Sowohl in Figur 8a als auch in Figur 8b ist mit I ein Empfangssignal mit hohem Empfangssignalpegel und mit II ein Empfangssignal mit geringem Empfangssignalpegel dargestellt.

Wie aus Figur 8a ersichtlich, tritt bei hohem Empfangspegel im Empfangssignal I ein negativer Überschwinger auf, wodurch das Empfangssignal zusätzlich verzögert ist (x in Figur 8a), was zu einer Verfälschung der Distanzmessung führt. Daher wird bei hohem Empfangssignal das Empfangssignal des ersten Signalpfads (Figur 8a) verworfen und nur das Empfangssignal des zweiten Signalpfads (Figur 8b) zur Distanzmessung herangezogen.

Bei geringem Empfangspegel (II in den Figuren 8a, 8b) kann jedoch das Empfangssignal des ersten Signalpfads zur Distanzmessung herangezogen werden, da es in diesem Fall nicht übersteuert ist.

Die Kriterien zur Signalauswahl von Empfangssignalen einzelner Signalpfade für die Bestimmung von Distanzmesswerten sind in Figur 9 veranschaulicht. Dabei zeigt Figur 9 einen stark übersteuerten zeitlichen Empfangssignalverlauf.

Das Empfangssignal weist zahlreiche Überschwinger auf. Dementsprechend weist das Empfangssignal positive Triggerflanken $Z_p$ und negative Triggerflanken $Z_n$ auf, die als Kenngrößen jeweils gezählt und jeweils mit einem vorgegebenen Grenzwert verglichen werden. Als weitere Kenngrößen werden die Peak-Pegel $S_{max}$ mit einem der Spitzenwertdetektoren 12a, 12b bestimmt und mit einem vorgegebenen Grenzwert verglichen.

Schließlich werden als weitere Kenngrößen die Pulsbreiten $T_x$ von Überschwingern bestimmt und mit einem vorgegebenen Grenzwert verglichen.

Liegt wenigstens eine der Kenngrößen oberhalb des jeweiligen Grenzwerts, wird das Empfangssignal verworfen, das heißt bei der Bestimmung des Distanzmesswerts nicht berücksichtigt.

Leuze electronic GmbH + Co. KG
73277 Owen/Teck, DE

Bezugszeichenliste

(1)          Optischer Sensor
(2)          Gehäuse
(3)          Austrittsfenster

| | |
|---|---|
| (4) | Lichtimpuls |
| (5) | Sender |
| (6) | Sendeoptik |
| (7) | Empfänger |
| (7a, 7b) | Empfänger |
| (8) | Empfangsoptik |
| (9) | Auswerteeinheit |
| (10) | Objekt |
| (11) | Verstärker |
| (11a, 11b) | Verstärker |
| (12) | Spitzenwertdetektor |
| (12a, 12b) | Spitzenwertdetektor |
| (13a, 13b) | Trigger |
| (14a, 14b) | Zeitmesseinheit |
| $P_{T1}$, $P_{T2}$ | Triggerpunkt |
| $T_1$ $T_2$ | Zeitmesswert |
| $T_{DIF}$ | Zeitdifferenz |
| $T_{K1}$, $T_{K2}$ | Korrekturwert |
| $T_{TOF}$ | Laufzeit |
| $T_x$ | Pulsbreite |
| $Z_n$ | negative Triggerflanke |
| $Z_p$ | positive Triggerflanke |
| $S_{max}$ | Peak-Pegel |
| I | hoher Empfangssignalpegel |
| II | geringer Empfangssignalpegel |

**Patentansprüche**

1. Optischer Sensor (1) zur Erfassung von Objekten (10) in einem Überwachungsbereich, mit einem Lichtimpulse (4) emittierenden Sender (5), wenigstens einem Empfänger (7), der zum Empfang von von einem Objekt (10) zurückreflektierten Lichtimpulsen (4) ausgebildet ist, und mit einer Auswerteeinheit (9), in welcher aus der Laufzeit ($T_{TOF}$) von Lichtimpulsen (4) vom Sender (5) zu einem Objekt (10) und zurück zum Empfänger (7) ein Distanzmesswert für die Distanz des Objekts (10) zum optischen Sensor (1) bestimmt wird, **dadurch gekennzeichnet, dass** durch einen auf dem wenigstens einen Empfänger (7) auftreffenden Lichtimpuls (4) wenigstens ein Empfangssignal generiert wird, das mit wenigstens zwei Triggerpunkten ($P_{T1}$, $P_{T2}$) bewertet wird, wobei durch jeden Triggerpunkt ($P_{T1}$, $P_{T2}$) ein Zeitmesswert ($T_1$, $T_2$) generiert wird, und dass in der Auswerteeinheit (9) nur einer der Zeitmesswerte ($T_1$, $T_2$) zur Bestimmung des Distanzmesswerts herangezogen wird.

2. Optischer Sensor (1) nach Anspruch 1, **dadurch gekennzeichnet, dass** jeder Triggerpunkt ($P_{T1}$, $P_{T2}$) von einem Schwellwert gebildet ist.

3. Optischer Sensor (1) nach Anspruch 2, **dadurch gekennzeichnet, dass** jeder Schwellwert in einem Komparator vorgegeben ist.

4. Optischer Sensor (1) nach einem der Ansprüche 1 bis 3, **dadurch gekennzeichnet, dass** in der Auswerteeinheit (9) der durch einen ersten Triggerpunkt ($P_{T1}$) gewonnene Zeitmesswert ($T_1$) für die Bestimmung des Distanzmesswerts herangezogen wird, und dass aus der Differenz der mit dem Triggerpunkt ($P_{T1}$) gewonnenen Zeitmesswerte ($T_1$) ein Korrekturwert ($T_{R1}$)für den Distanzmesswert bestimmt wird.

5. Optischer Sensor (1) nach einem der Ansprüche 1 bis 3, **dadurch gekennzeichnet, dass** in der Auswerteeinheit (9) der durch einen ersten Triggerpunkt ($P_{T1}$) gewonnene Zeitmesswert ($T_1$) für die Bestimmung des Distanzmesswerts herangezogen wird, und dass der durch den weiteren Triggerpunkt ($P_{T2}$) gewonnene Zeitmesswert ($T_2$) zur Bestimmung eines Korrekturwerts ($T_{K2}$) herangezogen wird.

6. Optischer Sensor (1) nach einem der Ansprüche 4 oder 5, **dadurch gekennzeichnet, dass** der Korrekturwert ($T_{K1}$, $T_{K2}$) eine Hell-Dunkel-Korrektur des Distanzmesswerts bildet.

7. Optischer Sensor (1) nach einem der Ansprüche 1 bis 6, **dadurch gekennzeichnet, dass** die Triggerpunkte ($P_{T1}$, $P_{T2}$) in unterschiedlichen Signalpfaden generiert werden.

8. Optischer Sensor (1) nach Anspruch 7, **dadurch gekennzeichnet, dass** für einen empfangsseitigen registrierten Lichtimpuls (4) in den einzelnen Signalpfaden unterschiedliche Empfangssignale generiert werden.

9. Optischer Sensor (1) nach einem der Ansprüche 7 oder 8, **dadurch gekennzeichnet, dass** die Signalpfade unterschiedliche Empfänger (7a, 7b) aufweisen, in welchen Empfangssignale generiert werden, und/oder dass die Signalpfade jeweils einen Verstärker (11a, 11b) aufweisen, in welchem Empfangssignale verstärkt werden.

10. Optischer Sensor (1) nach Anspruch 9, **dadurch gekennzeichnet, dass** die Verstärker (11a, 11b) unterschiedliche Verstärkungscharakteristiken aufweisen.

11. Optischer Sensor (1) nach einem der Ansprüche 9 oder 10, **dadurch gekennzeichnet, dass** jedem Verstärker (11a, 11b) ein Spitzenwertdetektor (12a, 12b) zugeordnet ist.

12. Optischer Sensor (1) nach einem der Ansprüche 7 bis 11, **dadurch gekennzeichnet, dass** in der Auswerteeinheit (9) die Signalverläufe der Empfangssignale der Signalpfade bewertet werden, und dass abhängig von dieser Bewertung ein Signalpfad ausgewählt wird, wobei der Zeitmesswert ($T_1$, $T_2$), der mit dem Triggerpunkt ($P_{T1}$, $P_{T2}$) des ausgewählten Signalpfads generiert wird, zur Bestimmung des Distanzmesswerts herangezogen wird.

13. Optischer Sensor (1) nach Anspruch 12, **dadurch gekennzeichnet, dass** zur Bewertung eines Empfangssignals als Kenngröße positive und/oder negative Triggerflanken ($Z_p$, $Z_n$) gezählt und jeweils mit einem Grenzwert verglichen werden.

14. Optischer Sensor (1) nach einem der Ansprüche 12 oder 13, **dadurch gekennzeichnet, dass** zur Bewertung eines Empfangssignals als Kenngröße Peak-Pegel ($S_{max}$) und/oder Pulsbreiten von Überschwingern bestimmt und jeweils mit einem Grenzwert verglichen werden.

15. Optischer Sensor (1) nach einem der Ansprüche 13 oder 14, **dadurch gekennzeichnet, dass** ein Empfangssignal für die Bestimmung eines Distanzmesswerts dann verworfen wird, wenn eine Kenngröße dieses Empfangssignals oberhalb des jeweiligen Grenzwerts liegt.

## Fig. 1

## Fig. 2

**Fig. 3**

Fig. 4

a)

b)

c)

$T_{TOF}$

$T_1$ $T_2$

$P_{T2}$
$P_{T1}$

$T_{DIF}$

$T_{K1}$

$T_{K2}$

# Fig. 5

**Fig. 6**

Fig. 7

EP 4 036 597 A1

# Fig. 8

# Fig. 9

Europäisches Patentamt
European Patent Office
Office européen des brevets

# EUROPÄISCHER RECHERCHENBERICHT

**Nummer der Anmeldung**

EP 21 20 0382

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KURTTI S ET AL: "A Wide Dynamic Range CMOS Laser Radar Receiver With a Time-Domain Walk Error Compensation Scheme", IEEE TRANSACTIONS ON CIRCUITS AND SYSTEMS I: REGULAR PAPERS, IEEE, US, Bd. 64, Nr. 3, 1. März 2017 (2017-03-01), Seiten 550-561, XP011641888, ISSN: 1549-8328, DOI: 10.1109/TCSI.2016.2619762 [gefunden am 2017-02-23] * description referrring to figures 4 and 5 * ----- | 1-15 | INV. G01S7/4861 G01S7/487 |
| X | KURTTI SAMI ET AL: "A CMOS Receiver-TDC Chip Set for Accurate Pulsed TOF Laser Ranging", IEEE TRANSACTIONS ON INSTRUMENTATION AND MEASUREMENT, IEEE, USA, Bd. 69, Nr. 5, 22. Mai 2019 (2019-05-22), Seiten 2208-2217, XP011781930, ISSN: 0018-9456, DOI: 10.1109/TIM.2019.2918372 [gefunden am 2020-04-06] * description referring to figures 3,5,6 * ----- | 1-15 | |
| X | JAN NISSINEN ET AL: "A 0.13 Â m CMOS laser radar receiver with leading edge detection and time domain error compensation", 2009 IEEE INTRUMENTATION AND MEASUREMENT TECHNOLOGY CONFERENCE (I2MTC) - 5-7 MAY 2009 - SINGAPORE, SINGAPORE, IEEE, PISCATAWAY, NJ, USA, 5. Mai 2009 (2009-05-05), Seiten 900-903, XP031492764, ISBN: 978-1-4244-3352-0 * chapter "III. Timing Discriminator", figure 4 * ----- | 1-15 | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| München | 18. März 2022 | Damp, Stephan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)